Europäisches Patentamt

European Patent Office

Office européen des brevets

(19)

(11) Numéro de publication : **0 179 717 B1**

# (12) FASCICULE DE BREVET EUROPÉEN

(45) Date de publication du fascicule du brevet :
06.07.88

(51) Int. Cl.⁴ : **G 02 B 5/32, G 01 J 3/18**

(21) Numéro de dépôt : **85402026.0**

(22) Date de dépôt : **18.10.85**

(54) **Procédé de réalisation d'un réseau holographique corrigé et appareil de diffraction utilisant un réseau corrigé réalisé par le procédé.**

(30) Priorité : **19.10.84 FR 8416027**

(43) Date de publication de la demande :
**30.04.86 Bulletin 86/18**

(45) Mention de la délivrance du brevet :
**06.07.88 Bulletin 88/27**

(84) Etats contractants désignés :
**DE GB**

(56) Documents cités :
**FR-A- 2 125 118**
**US-A- 3 578 845**
**JOURNAL OF OPTICS, vol. 14, no. 4, juillet/août 1983, pages 209-212, Masson, Paris, FR; Z. MATEEVA: "Monochromator with a plane focussing diffraction grating"**

(73) Titulaire : **INSTRUMENTS S.A.**
**25, avenue de l'Opéra**
**F-75001 Paris (FR)**

(72) Inventeur : **Thevenon, Alain**
**1 Résidence Champs Fleuris**
**F-91220 Bretigny S/Orge (FR)**

(74) Mandataire : **Phélip, Bruno et al**
**c/o Cabinet Harlé & Phélip 21, rue de la Rochefoucauld**
**F-75009 Paris (FR)**

Jouve, 18, rue St-Denis, 75001 Paris, France

**0 179 717**

## Description

La présente invention a pour objet un procédé de réalisation d'un réseau holographique corrigé utilisable dans un appareil de diffraction, comme un spectrographe ou un monochromateur, du type utilisant deux miroirs concaves sphériques et un réseau plan et présentant une qualité accrue de correction des aberrations. L'invention couvre également les appareils utilisant un réseau corrigé réalisé par le procédé.

On connaît de tels appareils utilisés par exemple en spectrographie Raman, et dans lesquels la lumière à analyser est introduite par une fente d'entrée disposée à un foyer hors axe d'un miroir sphérique formant collimateur, qui renvoie un faisceau parallèle vers un réseau plan de diffraction. Par diffraction le réseau réfléchit la lumière en plusieurs faisceaux parallèles vers un deuxième miroir sphérique concave de focalisation. On obtient ainsi, pour chaque longueur d'onde de la lumière d'entrée, des images séparées de la fente d'entrée ; on peut alors ou bien, pour un fonctionnement en spectrographe, enregistrer ou observer la totalité du spectre formé ou bien, pour un fonctionnement en monochromateur, isoler une seule longueur d'onde par une fente de sortie.

Dans un tel appareil les miroirs sphériques de collimation et de focalisation sont utilisés hors axe et donnent lieu à des aberrations, en particulier des aberrations sphériques auxquelles peuvent s'ajouter des aberrations de coma et d'astigmatisme.

La présente invention vise à réduire le plus possible ces aberrations en les corrigeant par un tracé particulier des traits du réseau plan, qui pourront alors présenter de très légers écarts de parallélisme ou de pas. Ce réseau corrigé sera un réseau holographique, et l'invention vise aussi le procédé utilisé pour l'enregistrement holographique de ce réseau plan.

Selon l'invention, le procédé d'enregistrement holographique du réseau plan corrigé comporte les deux phases successives suivantes :

A — Réalisation d'un réseau sphérique auxiliaire par enregistrement holographique, sur une surface sphérique concave, des franges d'interférence de deux faisceaux monochromatiques de même longueur d'onde $l_0$ comprise dans la bande de correction,

— un faisceau parallèle formé par l'un des miroirs sphériques de l'appareil à partir d'une source située au foyer d'utilisation associé, et après réflexion sur un miroir plan disposé à la place du réseau,

— un faisceau divergent issu d'une autre source située au centre de la surface sphérique.

B — Réalisation du réseau final plan par enregistrement holographique, sur une surface plane disposée à l'emplacement normal du réseau dans l'appareil, des franges d'interférence de deux faisceaux monochromatiques de même longueur d'onde $l_0$ que dans la phase précédente,

— un faisceau parallèle formé par l'autre des miroirs sphériques de l'appareil à partir d'une source située au foyer d'utilisation associé,

— un faisceau parallèle formé par réflexion sur le réseau auxiliaire à partir d'une autre source située au centre de la surface sphérique support du réseau.

L'invention sera mieux comprise en se référant à un mode de réalisation particulier donné à titre d'exemple et représenté par les dessins annexés.

La figure 1 est un schéma optique s'appliquant aussi bien à l'état antérieur de la technique qu'à un appareil réalisé selon l'invention puisque la seule différence est dans le tracé des traits du réseau plan.

Les figures 2A et 2B illustrent les deux phases successives du procédé selon l'invention, pour l'enregistrement du réseau plan.

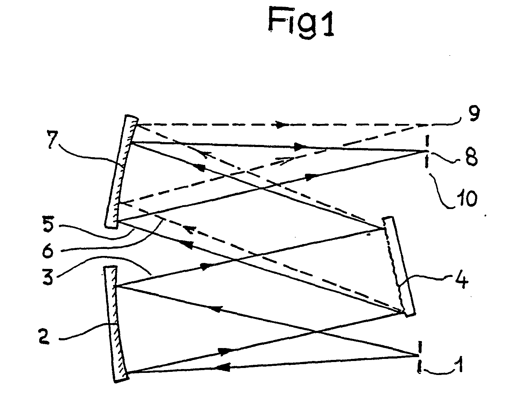

On retrouve sur la figure 1 les éléments habituels d'un appareil usuel de diffraction utilisé ici en monochromateur. La lumière à analyser y est introduite par la fente d'entrée 1, disposée à un foyer hors axe du miroir sphérique 2 qui renvoie donc un faisceau parallèle 3 vers un réseau plan de diffraction 4. Le réseau 4 réfléchit plusieurs faisceaux parallèles tels que 5 et 6, correspondant chacun à des longueurs d'onde différentes, vers un deuxième miroir sphérique de focalisation 7. Pour chaque longueur d'onde de la lumière introduite en 1 on obtient donc des images différentes 8 et 9 de la fente d'entrée et on pourra isoler la longueur d'onde choisie par une fente de sortie 10.

L'appareil de diffraction réalisé selon l'invention utilise exactement le même schéma optique, mais le tracé particulier des traits du réseau plan 4 permet de corriger les aberrations introduites par les miroirs sphériques 2 et 7.

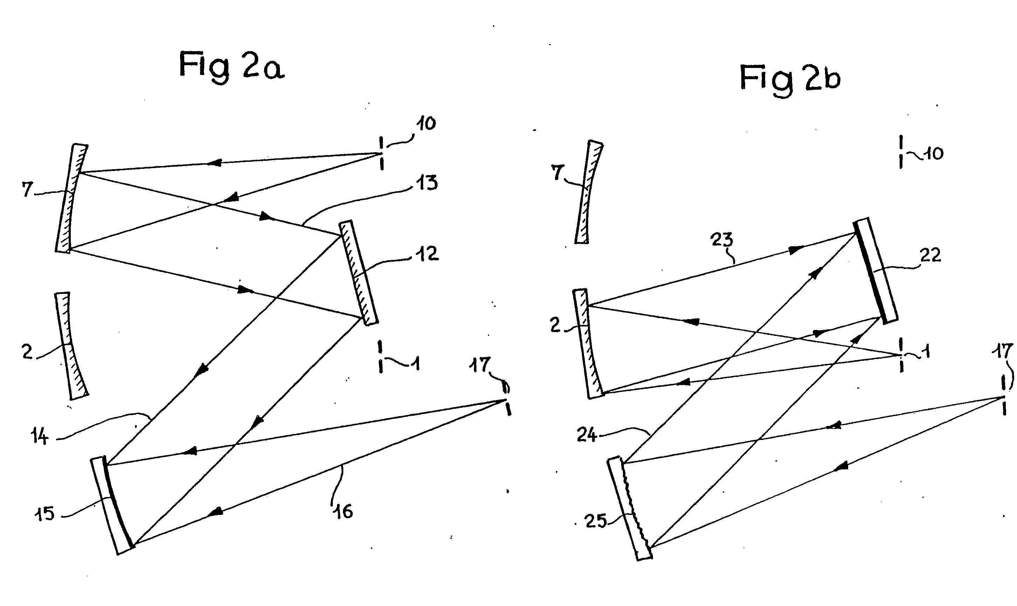

Le procédé particulier d'enregistrement holographique du réseau plan 4 comporte dans une première phase la réalisation intermédiaire d'un réseau holographique concave auxiliaire, puis dans une deuxième phase la réalisation du réseau plan 4. On observera sur les figures 2A et 2B que pendant ces deux phases du procédé d'enregistrement les deux miroirs sphériques 2 et 7, ainsi que les fentes 1 et 10, sont aux mêmes positions relatives que pour l'utilisation selon figure 1.

Dans la première phase (figure 2A), le réseau plan a été remplacé par un miroir plan 12. On utilise la

2

fente 10 comme fente d'entrée pour une lumière monochromatique de longueur d'onde $I_0$, de préférence comprise dans la plage de longueurs d'onde des lumières qui seront ensuite utilisées dans l'appareil. Le miroir sphérique 7 réfléchit alors un faisceau parallèle 13 que le miroir 12 renvoie en un autre faisceau parallèle 14.

On dispose sur le trajet du faisceau 14 une surface sphérique 15 recouverte, de façon usuelle pour l'enregistrement de réseaux holographiques, d'une résine photosensible. On éclaire simultanément la surface sphérique 15 par un faisceau divergent 16 de lumière monochromatique de même longueur d'onde $I_0$ que le faisceau 14, et issu d'une fente 17 disposée au centre de la sphère 15. Après impression sur le revêtement de la surface 15 des franges d'interférence des faisceaux 14 et 16 on traite à la manière habituelle la surface 15 pour aboutir à la formation sur cette surface d'un réseau holographique concave dont les traits reproduisent l'intersection des surfaces complexes d'interférence par la surface sphérique 15.

Pour la deuxième phase de l'opération (figure 2B) le réseau auxiliaire concave 25 obtenu dans la première phase est remis à la même place que la surface 15, et le miroir plan 12 est remplacé par une surface plane 22 recouverte, toujours de façon usuelle pour l'enregistrement de réseaux holographiques, d'une résine photosensible. On éclaire alors la surface 22 par un premier faisceau parallèle monochromatique 23 de longueur d'onde $I_0$ issu de la fente 1 après réflexion sur le miroir 2. Simultanément la surface 22 est éclairée par un deuxième faisceau parallèle monochromatique 24, de même longueur d'onde $I_0$, issu de la fente 17 après réflexion sur le réseau 25. On sait en effet que, le réseau 25 ayant été enregistré par les interférences d'un faisceau parallèle 14 et d'un faisceau divergent 16 en provenance de la fente 17, il suffit d'éclairer le faisceau 25 par le seul faisceau en provenance de 17 pour que celui-ci se réfléchisse sur le réseau en un faisceau 24 de même caractéristique que le faisceau d'enregistrement 14, c'est-à-dire parallèle et dirigé vers la surface 22 substituée au miroir 12.

Après impression sur le revêtement de la surface 22 des franges d'interférence des faisceaux 23 et 24 on traite à la manière habituelle la surface 22 pour aboutir à la formation sur cette surface d'un réseau holographique plan dont les traits reproduisent l'intersection par le plan 22 des surfaces d'interférence des faisceaux parallèles 23 et 24. C'est ce réseau plan qui sera utilisé en 4 dans l'appareil selon figure 1.

Globalement les surfaces d'interférence des ondes planes des faisceaux parallèles 23 et 24 sont des plans parallèles équidistants et leur intersection par le plan 22 conduit à un réseau plan à traits parallèles et équidistants. Cependant les aberrations introduites par le miroir sphérique 2 se traduisent par des aberrations de planéité des ondes du faisceau 23. De même la planéité des ondes du faisceau 14 (fig. 2A) a subi des aberrations du fait du miroir 7 et les mêmes aberrations de planéité se retrouveront dans le faisceau 24 (fig. 2B) après réflexion sur le réseau 25 enregistré à partir du faisceau 14. Il en résulte que les traits globalement parallèles et équidistants du réseau 4 présentent en fait eux-mêmes d'imperceptibles aberrations dans leur parallélisme et la régularité de leur pas.

On observe que les aberrations ainsi volontairement créées sur le tracé du réseau 4 permettent une très sensible correction des aberrations introduites de façon parasite par les miroirs sphériques 2 et 7.

Exemple

On a réalisé un monochromateur selon la figure 1 pour une longueur d'onde d'utilisation de 4880 Å, avec des miroirs 2 et 7 de distances focales respectivement 639,699 et 639,226 mm avec un réseau plan à 1200 traits par millimètre. L'angle de l'axe du faisceau incident issu de la fente 1 avec l'axe au sommet du miroir 2 est de 4,29421 degrés. Le réseau 4 reçoit le faisceau parallèle 3 sous une incidence de 8,130 degrés et renvoie la longueur d'onde 4880 Å sous un angle de réflexion de 26,370 degrés. Ce faisceau réfléchi fait un angle de 4,82568 degrés avec la normale au sommet du miroir 7. Pour la réalisation du réseau auxiliaire 25 on a utilisé une surface sphérique 15 de rayon 938 mm et une longueur d'onde d'enregistrement de 4 880 Å.

Dans ces conditions, la qualité de l'image de la fente d'entrée est améliorée ; en particulier l'astigmatisme est réduit et l'on obtient les performances suivantes, en utilisant des fentes d'entrée et de sortie de hauteur 1 mm et de largeur 0,005 mm.

| | Longueur d'onde Å | Réseau non corrigé | Réseau corrigé |
|---|---|---|---|
| Hauteur d'astigmatisme (mm) | 3131 | 1,4 | 0,5 |
| | 4880 | 1,4 | 0 |
| | 5460 | 1,4 | 0,15 |
| Résolution (Å) | 3131 | 0,24 | 0,12 |
| | 4880 | 0,20 | 0,08 |
| | 5460 | 0,20 | 0,08 |

**0 179 717**

Bien entendu, l'invention ne se limite pas aux détails du mode de réalisation qui vient d'être décrit à titre d'exemple, mais couvre également les variantes restant dans le cadre de protection défini par les revendications. D'une façon générale, l'invention permet de réaliser des réseaux corrigés utilisables dans les monochromateurs comprenant deux miroirs concaves et un réseau plan, notamment du type CZENY-TURNER ou EBERT-FASTIE mais de tels réseaux pourraient également trouver d'autres applications.

## Revendications

1. Procédé de réalisation d'un réseau holographique plan corrigé dans une bande de longueurs d'onde, destiné à être utilisé dans un apareil de diffraction où une lumière émise par une source d'entrée (1) est collimatée par un premier miroir sphérique (2) vers le réseau (4) qui renvoie des faisceaux parallèles vers un deuxième miroir sphérique (7) de focalisation pour formation d'un spectre, caractérisé par le fait qu'il comporte les deux phases successives suivantes :

A — Réalisation d'un réseau sphérique auxiliaire (25) par enregistrement holographique, sur une surface sphérique concave (15), des franges d'interférence de deux faisceaux monochromatiques de même longueur d'onde ($l_0$) comprise dans la bande de correction,

— un faisceau parallèle (14) formé par l'un (7) des miroirs sphériques de l'appareil à partir d'une source située au foyer d'utilisation associé (10), et après réflexion sur un miroir plan (12), disposé à la place du réseau (4),

— un faiceau divergent (16) issu d'une autre source située au centre (17) de la surface sphérique (15),

B — Réalisation du réseau final plan (4) par enregistrement holographique, sur une surface plane (22) disposée à l'emplacement normal du réseau (4) dans l'appareil, des franges d'interférence de deux faisceaux monochromatiques de même longueur d'onde ($l_0$) que dans la phase précédente,

— un faisceau parallèle (23) formé par l'autre (2) des miroirs sphériques de l'appareil à partir d'une source située au foyer d'utilisation associé (1),

— un faisceau parallèle (24) formé par réflexion sur le réseau auxiliaire (25) à partir d'une autre source située au centre (17) de la surface sphérique support du réseau (25).

2. Appareil de diffraction dans lequel une lumière émise par une source d'entrée (1) est collimatée par un premier miroir sphérique (2) vers un réseau plan (4) qui renvoie des faisceaux parallèles vers un deuxième miroir sphérique (7) de focalisation d'un spectre, caractérisé par le fait que le réseau plan (4) est un réseau corrigé réalisé en utilisant le procédé selon revendication 1.

## Claims

1. Process for producing a plane holographic grating which is corrected in a band of wavelengths and which is intended to be used in a diffraction apparatus where a light beam emitted by an entrance source (1) is collimated by a first spherical mirror (2) towards the grating (4), which deflects parallel beams towards a second spherical mirror (7) for focusing, to form a spectrum, characterized in that it comprises the following two successive phases :

A — Production of an auxiliary spherical grating (25) by holographic recording, on a concave spherical surface (15), of the interference fringes of two monochromatic beams of the same wavelength ($l_0$) included within the correction band,

— a parallel beam (14) formed by one (7) of the spherical mirrors of the apparatus from a source situated at the associated working focus (10), and after reflection on a plane mirror (12) disposed at the place of the grating (4),

— a divergent beam (16) emanating from another source situated at the centre (17) of the spherical surface (15),

B — Production of the plane final grating (4) by holographic recording, on a plane surface (22) disposed at the normal site of the grating (4) in the apparatus, of the interference fringes of two monochromatic beams of the same wavelength ($l_0$) as in the preceding phase,

— a parallel beam (23) formed by the other (2) of the spherical mirrors of the apparatus from a source situated at the associated working focus (1),

— a parallel beam (24) formed by reflection on the auxiliary grating (25) from another source situated at the centre (17) of the spherical surface to support the grating (25).

2. Diffraction apparatus in which a light beam emitted by an entrance source (1) is collimated by a first spherical mirror (2) towards a plane grating (4), which deflects parallel beams towards a second spherical mirror (7) for focusing a spectrum, characterized in that the plane grating (4) is a corrected grating produced by using the process according to claim 1.

## Patentansprüche

1. Verfahren zur Herstellung eines ebenen holographischen Gitters, das bezüglich eines Wellenlän-

4

genbandes korrigiert ist und das in einer Beugungsvorrichtung verwendet werden kann, in der das von einer Eingangs-Lichtquelle (1) ausgesendete Licht von einem ersten Kugelspiegel (2) zum Gitter (4) gelenkt wird, das parallele Lichtstrahlen zwecks Ausbildung eines Spektrums zu einem zweiten Brennkugelspiegel (7) lenkt, dadurch gekennzeichnet, daß die folgenden Verfahrensschritte nacheinander durchgeführt werden :

A — Erzeugung eines Hilfs-Kugelgitters (25) mittels holographischer Aufzeichnung auf einer konkaven Kugelfläche (15), wobei Interferenzstreifen der beiden monochromatischen Strahlen derselben Wellenlänge ($l_0$) im Korrekturband enthalten sind,

— ein Parallelstrahl (14), der durch einen der Kugelspiegel (7) der Vorrichtung gebildet wird, und zwar ausgehend von einer Quelle, die sich im Brennpunkt (10) der verbundenen Verwendung befindet, und nach Reflexion an einem ebenen Spiegel (12), der sich an der Stelle des Gitters (4) befindet,

— ein divergierendes Strahlenbündel (16), das von einer anderen Quelle ausgeht, die sich in der Mitte (17) des Kugelspiegels (15) befindet,

B — Herstellung des endgültigen ebenen Gitters (4) durch holographische Aufzeichnung auf einer ebenen Fläche (22), die sich am normalen Ort des Gitters (4) in der Vorrichtung befindet, mit Interferenzstreifen der beiden monochromatischen Lichtstrahlen mit derselben Wellenlänge ($l_0$) wie beim vorhergehenden Verfahrensschritt,

— ein paralleles Strahlenbündel (23), das durch den anderen der Kugelspiegel (2) der Vorrichtung gebildet wird, und zwar ausgehend von einer Quelle, die sich im Brennpunkt (1) der zugeordneten Verwendung befindet,

— ein paralleles Strahlenbündel (24), das durch Reflexion am Hilfsgitter (25) gebildet wird, und zwar ausgehend von einer anderen Quelle, die sich im Mittelpunkt (17) der Kugelfläche als Träger des Gitters (25) befindet.

2. Brechungsvorrichtung, bei dem ein von einer Eingangs-Lichtquelle (1) ausgesandtes Strahlenbündel über einen ersten Kugelspiegel (2) zu einem ebenen Gitter (4) gelenkt wird, der ein paralleles Strahlenbündel zu einem zweiten Kugelspiegel (7) für die Fokalisation eines Spektrums lenkt, dadurch gekennzeichnet, daß das ebene Gitter (4) als korrigiertes Gitter ausgebildet ist, das unter Verwendung des Verfahrens nach Patentanspruch 1 hergestellt worden ist.

# Fig 1

# Fig 2a

# Fig 2b

0 179 717